# EUROPÄISCHE PATENTSCHRIFT

(11) **EP 1 236 523 B1**
(45) Veröffentlichungstag und Bekanntmachung des Hinweises auf die Patenterteilung: **28.03.2007**
(21) Anmeldenummer: 02004098.6
(22) Anmeldetag: 25.02.2002
(51) Int. Cl.: B21C 35/02, B29C 47/34

(54) **Ausziehvorrichtung, insbesondere Puller**
Extraction device
Dispositif d'extraction

(30) Priorität: 28.02.2001 DE 10109751
(43) Veröffentlichungstag der Anmeldung: 04.09.2002
(73) Patentinhaber: SMS EUMUCO GmbH, 51377 Leverkusen (DE)
(72) Erfinder: Keller, Christoph, 78234 Engen-Welschingen (DE)
(74) Vertreter: Grosse, Wolf-Dietrich Rüdiger

(56) Entgegenhaltungen:
- EP-A- 0 646 426
- GB-A- 2 174 516
- US-A- 4 628 719

## Beschreibung

Die vorliegende Erfindung betrifft eine Ausziehvorrichtung, insbesondere Puller zum Einspannen von auf einer Transporteinrichtung ausgeförderten Strangpressprofilen aus Strangpressanlagen, mit zumindest einer Einspanneinrichtung aus einem Spannelement und einem Gegenhalter.

Derartige Ausziehvorrichtungen sind in vielfältiger Form und Ausführung im Markt bekannt und erhältlich. Sie dienen im wesentlichen zum Ausziehen und Strecken eines aus einer Presse ausgepressten Strangpressprofiles, um dieses beispielsweise auf einer Transporteinrichtung abzulegen und gleichzeitig zu strecken. Während dem Ausziehen bzw. Strecken der ausgepressten Strangpressprofile werden diese häufig abgekühlt, da durch das Umformen beim Strangpressen das Strangpressprofil stark erwärmt wird, bis auf eine Temperatur von etwa 500° bis 520°C.

Aus der GB-A-2 174 516 ist zum Ausfördern eines Strangprofils eine Ausziehvorrichtung bekannt, die einen Wagen mit einem darin angeordneten Ausziehkopf umfasst. Der Ausziehkopf ist als einheitlicher Spannkloben zangenartig ausgebildet. In einem Ausführungsbeispiel sind in paralleler Anordnung zwei solcher Ausziehköpfe mit ihren Wagen vorgesehen. Zum wechselweisen Betrieb sind die Ausziehköpfe als vollständige, komplette Einheit aus der Bewegungsbahn des einzigen Strangpressprofils heraus schwenkbar.

Durch die EP-A-0 646 426 ist eine Auszugsvorrichtung bekannt geworden, bei der zwei hintereinander angeordnete Wagen in jeweils einem scherenartigen Hebelgestänge mit einem Greiferkopf ausgebildet sind, der an einem vorkragenden, freien Ende eines Hebelarms des Hebelgestänges vorgesehen ist. Zum Einspannen und Ausziehen/-fördern des einzigen Strangpressprofils ist in jedem Greiferkopf ein um eine horizontale Schwenkachse vertikal nach oben und unten in seiner Position verlagerbarer Lamellenkloben angeordnet. Es wird ebenfalls die gesamte Greifereinheit verschwenkt, und zwar komplett das Hebelgestänge einschließlich Greiferkopf um Horizontalachsen.

Es werden immer höhere Anforderungen an die ausgepressten Strangpressprofile gestellt, was beispielsweise die Oberflächenbeschaffenheit und die Gefügestruktur oder Härte betrifft. Insbesondere durch Kühleinrichtungen lässt sich ein auszubringendes Pressprofil beispielsweise vergüten.

Zudem werden immer höhere Anforderungen an die Ausziehvorrichtungen gestellt, was insbesondere das Gewicht der Ausziehvorrichtungen, die Transportgeschwindigkeit und die Herstellungskosten betrifft. Die im Markt erhältlichen und bekannten Ausziehvorrichtungen sind meist schwer, apparativ aufwendig aufgebaut, und mit aufwendigen Antriebssystemen versehen, um diese entlang einer Transporteinrichtung hin- und herzubewegen. Diese beschleunigen träge und langsam, was ebenfalls unerwünscht ist.

Der vorliegenden Erfindung liegt die Aufgabe zugrunde, eine Ausziehvorrichtung der eingangs genannten Art zu schaffen, welche die genannten Nachteile beseitigt, mit welcher ein effektives Ergreifen von Strangpressprofilen möglich ist, und ein sehr schnelles Loslassen und Verfahren bei möglichst geringem Raumbedarf der Ausziehvorrichtung realisierbar ist. Ferner soll eine derartige Ausziehvorrichtung bei einem Überholvorgang, insbesondere bei einer Überholstelle zweier Ausziehvorrichtungen, insbesondere Einspanneinrichtungen äußerst wenig Raum einnehmen. Derartige Ausziehvorrichtungen sollen schnell entlang von Führungssystemen bewegbar, beschleunigbar in X- und Z-Richtung unabhängig verfahrbar sein.

Diese Aufgabe wird erfindungsgemäß dadurch gelöst, daß der Gegenhalter über die vollständige Breite der Transporteinrichtung reichend ausgebildet ist und gegenüber dem Spannelement bewegbar, insbesondere verschwenkbar ist.

Bei der vorliegenden Erfindung ist somit jeder Einspanneinrichtung ein Spannelement und ein Gegenhalter zugeordnet, wobei das Spannelement gegen den Gegenhalter bewegbar ist. Vorzugsweise ist das Spannelement in Ausnehmungen in entsprechenden Seitenteilen gelagert.

Dabei lässt sich der Gegenhalter innerhalb einer Ebene bewegen, die parallel zu einer Transportebene verläuft. Der Gegenhalter lässt sich vorzugsweise über zumindest ein Antriebselement aus den Ausnehmungen der Seitenteile herausverschwenken. Dabei lässt er sich vorzugsweise um 90° verschwenken, so daß er dann in etwa parallel zur Längsrichtung der Transporteinrichtung angeordnet ist, und zwischen den Seitenteilen und dem Spannelement auch eine Öffnung gebildet ist. Hierdurch lässt sich die Einspanneinrichtung, welche kein Strangpressprofil aufnimmt, über die andere Einspanneinrichtung bewegen, um unmittelbar nach dem Ausziehen der ersten Strangpressprofile die nächsten erneut gepressten Strangpressprofile unmittelbar an der Presse aufzunehmen.

Dabei bleibt permanent gewährleistet, daß ein Abstand zwischen einer Kühleinrichtung, und Transporteinrichtung die vorzugsweise zwischen den Führungssystemen der einzelnen Einspanneinrichtungen angeordnet ist, äußerst gering gehalten ist. Insbesondere ein Abstand der Kühleinrichtung und der Transporteinrichtung kann hierdurch erheblich reduziert werden, was die Kühleigenschaften der Strangpressprofile erheblich verbessert. Hierdurch lassen sich kleinere Kühleinrichtungen realisieren, die unmittelbar kalte Luft auf die ausgepressten Profile aufbringen können.

Auch ist von Vorteil bei der vorliegenden Erfindung, dass bei einem Überholvorgang zweier Einspanneinrichtungen, die übereinander angeordnet sind, wobei die eine Einspanneinrichtung die ausgepressten Strangpressprofile aufnimmt und die andere die Einspanneinrichtung darüber verfahrbar ist, deren Gegenhalter ausgeschwenkt ist, eine Öffnung zwischen den Seitenteilen freigegeben ist. Hierdurch kann dann die entsprechende aktive Einspanneinrichtung im Bereich der Öffnung der anderen Einspanneinrichtung hindurchbewegt werden, so dass ebenfalls auch während des Überholprozesses ein geringer Abstand A zwischen Kühleinrichtung und Transporteinrichtung gewährleistet bleibt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Draufsicht auf einen Teil einer Strangpressanlage mit erfindungsgemässer Ausziehvorrichtung;
Figur 2 eine schematisch dargestellte perspektivische Ansicht auf einen Teil der Strangpressanlage, insbesondere auf den Bereich der Ausziehvorrichtung;
Figur 3 eine schematisch dargestellte Draufsicht auf einen Ausschnitt auf die Ausziehvorrichtung gemäss Figur 1 in einer Gebrauchslage;
Figur 4 einen schematisch dargestellten Teillängsschnitt durch einen Teil der Ausziehvorrichtung gemäss Figur 3 entlang Linie III-III.

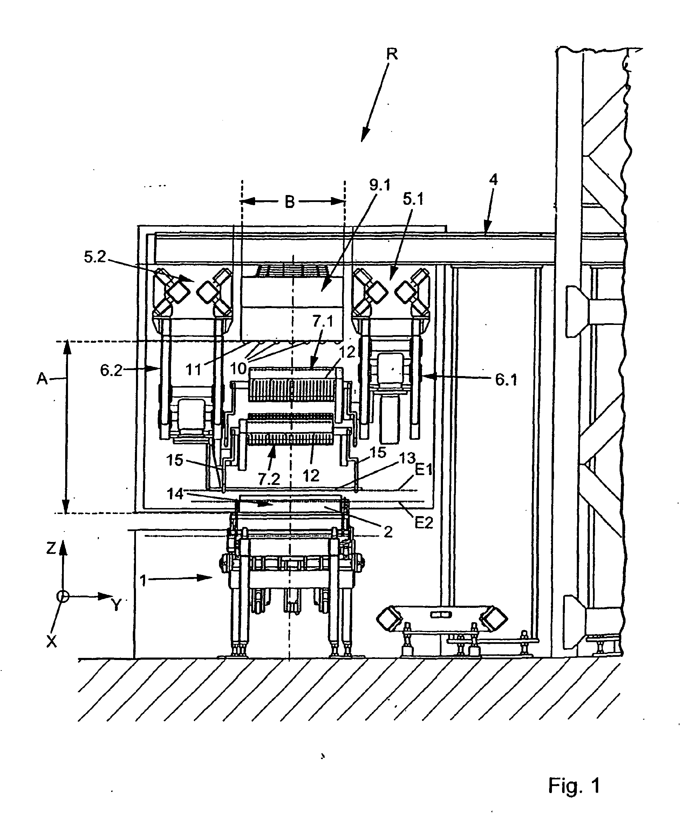

Gemäss Figur 1 weist eine erfindungsgemässe Ausziehvorrichtung R eine Transporteinrichtung 1 auf, welche mit einer Vielzahl von passiv mitlaufenden oder aktiv angetriebenen Walzenelemente 2 versehen ist, die wie hier nicht näher dargestellt, absenkbar ausgebildet sind.

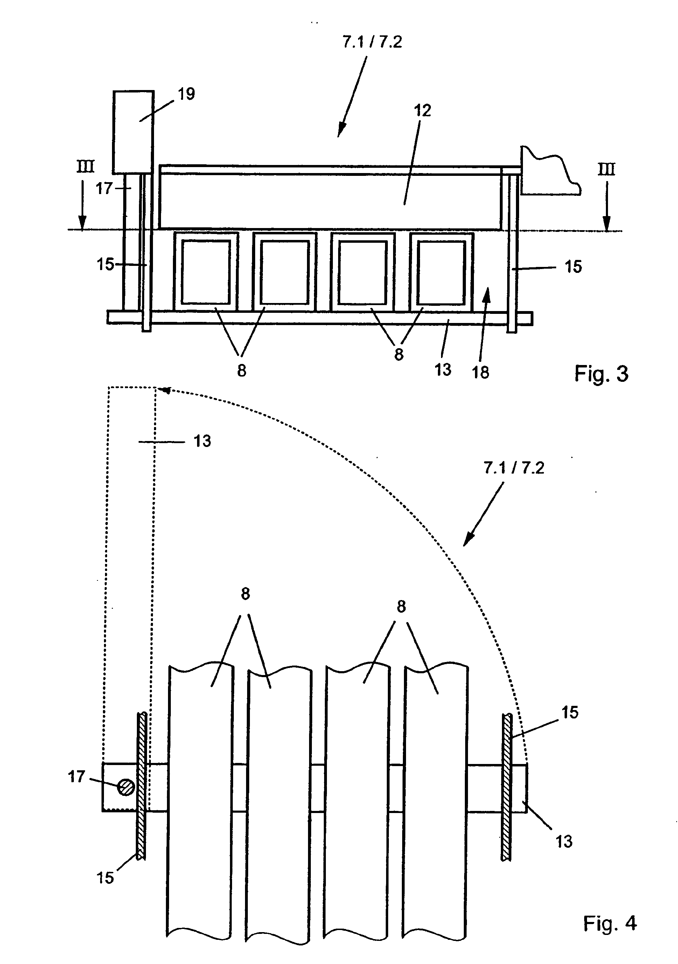

Die Transporteinrichtung 1 schliesst unmittelbar einer hier nicht dargestellten Strangpressanlage an. Dabei übergreift ein Gestell 4 die Transporteinrichtung 1, an welchem im bevorzugten Ausführungsbeispiel über Führungssysteme 5.1, 5.2, zwei Puller 6.1, 6.2 linear entlang einer X-Richtung hin- und herbewegbar bzw. verfahrbar sind. Die Puller 6.1, 6.2 sind mit Einspannvorrichtungen 7.1, 7.2 versehen, die über der Transporteinrichtung 1 angeordnet sind. Die Einspanneinrichtung 7.1, 7.2 dient zum Aufnehmen und Einspannen eines unmittelbar aus einer Presse austretenden bzw. ausgepressten Strangpressprofiles 8, siehe Figur 3. Der Puller 6.1 oder 6.2 ergreift ein unmittelbar aus der Presse austretendes Strangpressprofil 8 mit seiner Einspanneinrichtung 7.1 oder 7.2. Während des Auspressvorganges aus der Press wird das Strangpressprofil 8 über die Transporteinrichtung 1 gestreckt bzw. mittels der Puller 6.1, 6.2 bewegt.

Ferner ist zwischen den Führungssystemen 5.1, 5.2 eine Kühleinrichtung 9.2 oberhalb der Transporteinrichtung 1 angeordnet. Die Kühleinrichtung 9.2 ist in etwa mittig und nahe über der Transporteinrichtung 1 über eine Breite B, die in etwa der Transporteinrichtung 1 entspricht, angeordnet. Die Führungssysteme 5.1 bzw. 5.2 sind jeweils seitlich ebenfalls am Gestell 4 neben der Kühleinrichtung 9.1 angeordnet. Dabei kann die Kühleinrichtung 9.1 eine Mehrzahl von Düsenelementen 10 zum Ausbringen von kalter Luft oder kaltem Gas aufweisen. Dabei können die Düsenelemente 10 über die vollständige Länge und die vollständige Breite B der Kühleinrichtung 9.1 an einer Unterseite 11 angeordnet sein. Die Kühleinrichtung 9.1 wird über hier nicht näher dargestellte Luftzuführeinrichtungen mit kalter Luft versorgt, um die ausgepressten Strangpressprofile 8 zu kühlen.

Damit die Kühleinrichtung 9.1 besonders nahe mit einem geringst möglichen Abstand A zu den Walzenelementen 2 der Transporteinrichtung 1 beabstandet ist, und dennoch ein Verfahren der Puller 6.1, 6.2 bzw. Einspanneinrichtungen 7.1, 7.2 auch übereinander, wie es in Figur 1 dargestellt ist, möglich ist, hat sich als besonders vorteilhaft bei der vorliegenden Erfindung erwiesen, die Einspanneinrichtung 7.1, 7.2 mit jeweils einem Spannelement 12 und einem Gegenhalter 13 zu versehen.

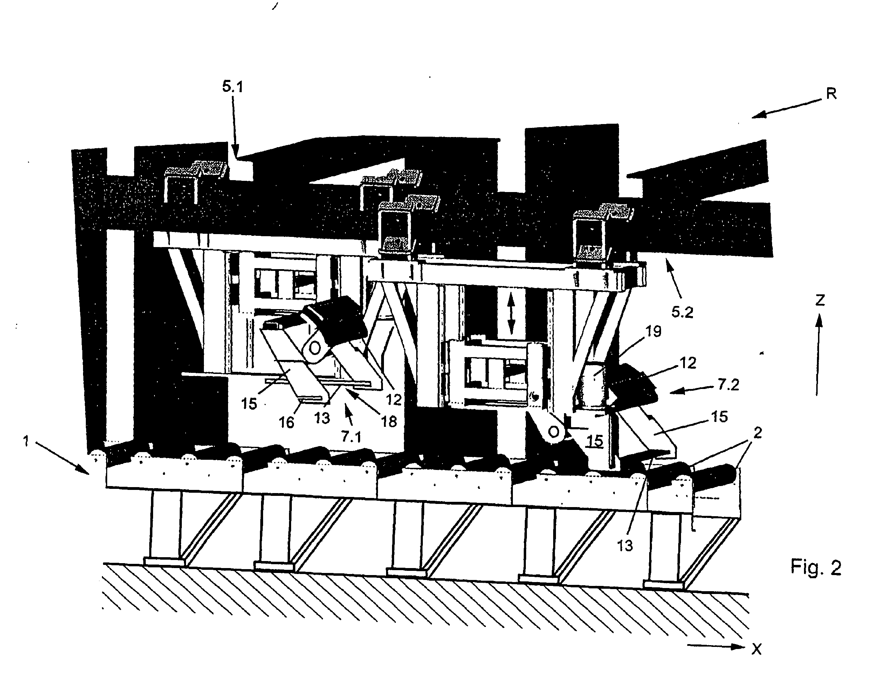

Insbesondere bspw. bei einem Überholen der einzelnen Puller 6.1, 6.2, insbesondere deren Spanneinrichtungen 7.1, 7.2, wie es in Figur 1 dargestellt ist, lässt sich der Gegenhalter 13 der überholenden Spanneinrichtung 7.1 aus einem Transportbereich 14 herausschwenken, wie es bei der Einspanneinrichtung 7.1 in den Figuren 1 und 2 dargestellt ist, um gleichzeitig einen geringstmöglichen Abstand A zwischen Kühleinrichtung 9.1 und Transporteinrichtung 1 zu gewährleisten.

Der Gegenhalter 13 der Spanneinrichtung 7.2 ist jedoch über die vollständige Breite der Transporteinrichtung 1 angeordnet und greift in die jeweiligen Seitenteile 15 in hier lediglich nur angedeutete Ausnehmungen 16 ein und wird dort gelagert bzw. gehaltert. Der Gegenhalter 13 ist in einer Ebene E1 verschwenkbar, die parallel zu einer Transportebene E2 der Transporteinrichtung 1 verläuft.

Das Spannelement 12 ist, wie in Figur 2 angedeutet, gegen den Gegenhalter 13 verschwenkbar, um die Strangpressprofile 8, wie es in Figur 3 angedeutet ist, zwischen Gegenhalter 13 und Spannelement 12 zum Ausziehen aus der Presse einzuspannen.

Wird jedoch, wie es insbesondere in Figur 4 gestrichelt angedeutet ist, der Gegenhalter 13 um eine Schwenkachse 17 um 90°Grad verschwenkt, so ist der Gegenhalter 13 in etwa parallel zur hier nicht dargestellten Transporteinrichtungen 1 angeordnet, so dass zwischen den Seitenteilen 15 und dem Spannelement 12 eine Öffnung 18 freigegeben ist. Wie es bspw. in den Figuren 1 und 2 dargestellt ist, lässt sich innerhalb der Öffnung 18 beim Überholvorgang von Einspanneinrichtung 7.1 und 7.2 die Einspanneinrichtung 7.2 im Bereich der Öffnung 18 sich unterhalb der Einspanneinrichtung 7.1 bewegen, wodurch ein niedriger Abstand A gewährleistet wird bzw. realisierbar ist.

Ferner kann im Anschluss an einen Überholvorgang bspw. die Einspanneinrichtung 7.1 mit geöffneten Gegenhalter 13 wieder gegen die Transporteinrichtung 1 nach unten bewegt werden, wobei die jeweiligen Seitenteile 15 dann die Strangpressprofile 8 übergreifen. Auf diese Weise kann sehr niedrig direkt über den Strangpressprofilen 8 die Einspanneinrichtung 7.1 gegenüber diesen verfahren werden, so dass in diesen Bereichen, in welchen ein Überholvorgang der beiden Spanneinrichtungen 7.1, 7.2 nicht erforderlich ist, bspw. die Kühleinrichtung 9.1 sehr niedrig in einem geringen Abstand A über der Transporteinrichtung 1 angeordnet sein kann, um eine optimale Kühlung der ausgepressten Strangpressprofile 8 zu gewährleisten.

Damit sich der Gegenhalter 13 aus der Ausnehmung 16 der Seitenteile 15 herausbewegen lässt, ist zumindest ein Antriebselement 19 dem zumindest einen Seitenteil 15 zugeordnet und lässt ein Verschwenken des Gegenhalters 13 über die Schwenkachse 17 zu. Vorzugsweise wird der Gegenhalter 13 in bzw. mit einer Bewegungsrichtung der Einspanneinrichtung 7.1, 7.2 zur Presse um 90°Grad verschwenkt. Es soll jedoch im Rahmen der vorliegenden Erfindung liegen auch ein Verschwenken des Gegenhalters 13 entgegen seiner Bewegungsrichtung zu realisieren. Vorzugsweise ist jedoch ein Verschwenken des Gegenhalters 13 entgegen der Zugrichtung der Einspanneinrichtung 7.1, 7.2.

### Positionszahlenliste

| | | | | | |
|---|---|---|---|---|---|
| 1 | Transporteinrichtung | 34 | | 67 | |
| 2 | Walzenelemente | 35 | | 68 | |
| 3 | | 36 | | 69 | |
| 4 | Gestell | 37 | | 70 | |
| 5 | Führungssystem | 38 | | 71 | |
| 6 | Puller | 39 | | 72 | |
| 7 | Einspanneinrichtung | 40 | | 73 | |
| 8 | Strangpressprofil | 41 | | 74 | |
| 9 | Kühleinrichtung | 42 | | 75 | |
| 10 | Düsenelement | 43 | | 76 | |
| 11 | Unterseite | 44 | | 77 | |
| 12 | Spannelement | 45 | | 78 | |
| 13 | Gegenhalter | 46 | | 79 | |
| 14 | Transportbereich | 47 | | R | Ausziehvorrichtung |
| 15 | Seitenteil | 48 | | A | Abstand |
| 16 | Ausnehmung | 49 | | B | Breite |
| 17 | Schwenkachse | 50 | | E1 | Ebene |
| 18 | Öffnung | 51 | | E2 | Transportebene |
| 19 | Antriebselement | 52 | | | |
| 20 | | 53 | | | |
| 21 | | 54 | | X | Bewegungsrichtung |
| 22 | | 55 | | | |
| 23 | | 56 | | Z | Richtung |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Ausziehvorrichtung, insbesondere Puller, zum Einspannen von auf einer Transporteinrichtung (1) ausgeförderten Strangpressprofilen (8) aus Strangpressanlagen, mit zumindest einer Einspanneinrichtung (7.1, 7.2) aus einem Spanelement (12) und einem Gegenhalter (13),
**dadurch gekennzeichnet,**
**daß** der Gegenhalter (13) über die vollständige Breite der Transporteinrichtung (1) reichend ausgebildet ist und gegenüber dem Spannelement (12) bewegbar, insbesondere verschwenkbar angeordnet ist.

2. Ausziehvorrichtung nach Anspruch 1,
**dadurch gekennzeichnet,**
**daß** der Gegenhalter (13) aus einem Transportbereich (14) der Strangpressprofile (8) herausschwenkbar ist.

3. Ausziehvorrichtung nach Anspruch 1,
**dadurch gekennzeichnet,**
**daß** zum Überholen nahe übereinander verfahrbarer Einspanneinrichtungen (7.1, 7.2) bzw. Puller ein Gegenhalter (13) des überholenden Pullers herausgeschwenkt ist.

4. Ausziehvorrichtung nach einem der Ansprüche 1 bis 3,
**dadurch gekennzeichnet,**
**daß** der Gegenhalter (13) in einer Ebene (E1) verschwenkbar angeordnet ist, die in etwa parallel zu einer Transportebene (E2) einer Transporteinrichtung (1) ist.

5. Ausziehvorrichtung nach einem der Ansprüche 1 bis 4,
**dadurch gekennzeichnet, daß** der Gegenhalter (13) in einer Bewegungsrichtung (X) beim Verfahren der Einspanneinrichtung (7.1, 7.2) gegen die Strangpressanlage verschwenkbar, insbesondere verfahrbar ist.

6. Ausziehvorrichtung nach einem der Ansprüche 1 bis 5,
**dadurch gekennzeichnet,**
**daß** der Gegenhalter (13) um etwa 90° verschwenkbar angeordnet ist.

7. Ausziehvorrichtung nach einem der Ansprüche 4 bis 6,
**dadurch gekennzeichnet,**
**daß** nach einem Verschwenken des Gegenhalters (13) dieser in etwa parallel zur Transporteinrichtung (1) angeordnet ist.

8. Ausziehvorrichtung nach einem der Ansprüche 1 bis 7,
**dadurch gekennzeichnet,**
**daß** durch Verschwenken des Gegenhalters (13) eine Öffnung (18) zwischen Spannelement (12) und Seitenteilen (15) gebildet ist.

9. Ausziehvorrichtung nach Anspruch 8,
**dadurch gekennzeichnet,**
**daß** durch die gebildete Öffnung (18) die Einspanneinrichtung (7.1, 7.2), insbesondere der Puller nahe über der Transporteinrichtung (1) verfahrbar ist wobei die Seitenteile (15) die auf der Transporteinrichtung (1) verbleibenden Strangpressprofile (8) jeweils seitlich übergreifen.

10. Ausziehvorrichtung nach einem der Ansprüche 1 bis 9,
**dadurch gekennzeichnet,**
**daß** der Gegenhalter (13) über wenigstens ein Antriebselement (19) verschwenkbar angeordnet ist.

11. Ausziehvorrichtung nach Anspruch 10,
**dadurch gekennzeichnet,**
**daß** das Antriebselement (19) einem der Seitenteile (15) zugeordnet ist, wobei in dem jeweiligen anderen Seitenteil (15) zumindest eine Ausnehmung (16) zur Halterung und zur Lagerung des Gegenhalters (13) vorgesehen ist.

12. Ausziehvorrichtung nach einem der Ansprüche 1 bis 11,
**dadurch gekennzeichnet,**
**daß** die Einspanneinrichtung (7.1, 7.2), insbesondere Spannelement (12) und Gegenhalter (13), entlang eines Führungssystems (5.1, 5.2) in und entgegen der Bewegungsrichtung (X) und die Einspanneinrichtung (7.1, 7.2) in und entgegen einer (Z) Richtung verfahrbar angeordnet sind.

13. Ausziehvorrichtung nach einem der Ansprüche 4 bis 10,
**dadurch gekennzeichnet,**
**daß** die Transporteinrichtung (1) mit einer Mehrzahl von Walzenelementen (2) versehen ist, die unter die Transportebene (E2) versenkbar, insbesodere verfahrbar sind, wobei der Gegenhalter (13) unter die Transportebene (E2) verfahrbar ist und bei eingefahrenen Walzenelementen (2) unterhalb der Transportebene (E2) verschwenkbar ist.

## Claims

1. A withdrawing device, in particular a puller, for the clamping of extruded sections (8) conveyed out on a conveying arrangement (1) from extruder installations, with at least one clamping device (7.1, 7.2) comprising a clamping element (12) and a counter-support (13),
**characterised in that**
the counter-support (13) is configured extending over the whole width of the conveying arrangement (1) and is mobile, in particular swivellable, with respect to the clamping element (12).

2. The withdrawing device according to claim 1,
**characterised in that**
the counter-support (13) can be swivelled out of a conveying region (14) of the extruded sections (8).

3. The withdrawing device according to claim 1,
**characterised in that**,
for the overhauling of clamping devices (7.1, 7.2) or pullers traversable one closely above the other, a counter-support (13) of the puller being overhauled is swivelled out.

4. The withdrawing device according to any one of claims 1 to 3,
**characterised in that**
the counter-support (13) is arranged in a swivelling fashion in a plane (E1) which is roughly parallel to a conveying plane (E2) of a conveying arrangement (1).

5. The withdrawing device according to any one of claims 1 to 4,
**characterised in that**
the counter-support (13) can be swivelled, in particular traversed, in a direction of motion (X), when clamping device (7.1, 7.2) is traversed towards the extruder installation.

6. The withdrawing device according to any one of claims 1 to 5,
**characterised in that**
the counter-support (13) is arranged capable of swivelling through approx. 90°.

7. The withdrawing device according to any one of claims 4 to 6,
**characterised in that**,
after swivelling of the counter-support (13), the latter is arranged roughly parallel to the conveying arrangement (1).

8. The withdrawing device according to any one of claims 1 to 7,
**characterised in that**
an opening (18) is formed between the clamping elements (12) and lateral parts (15) by swivelling of the counter-support (13).

9. The withdrawing device according to claim 8,
**characterised in that**
the clamping device (7.1, 7.2), in particular the puller, can be traversed closely above the conveying arrangement (1) through the formed opening (18), the lateral parts (15) engaging in each case laterally over the extruded sections (8) remaining on the conveying arrangement (1).

10. The withdrawing device according to any one of claims 1 to 9,
**characterised in that**
the counter-support (13) is arranged in a swivelling fashion by means of at least one drive element (19).

11. The withdrawing device according to claim 10,
**characterised in that**
the drive element (19) is assigned to one of the lateral parts (15), a recess (16) for holding and mounting the counter-support (13) being provided in the respective other lateral part (15).

12. The withdrawing device according to any one of claims 1 to 11,
**characterised in that**
the clamping device (7.1, 7.2), in particular the clamping element (12) and the counter-support (13), is arranged so as to be traversable along a guide system (5.1, 5.2) in and opposite to the direction of motion (X) and the clamping device (7.1, 7.2) in and opposite to a (Z) direction.

13. The withdrawing device according to any one of claims 4 to 10,
**characterised in that**
the conveying device (1) is provided with a plurality of roller elements (2), which can be swivelled, in particular traversed, beneath the conveying plane (E2), the counter-support (13) being traversable beneath the conveying plane (E2) and being swivellable beneath the conveying plane (E2) when roller elements (2) are retracted.

## Revendications

1. Dispositif de défournement, notamment extracteur pour serrer des profilés extrudés (8) évacués par un dispositif de transport (1) hors d'installations d'extrusion, avec au moins un dispositif de serrage (7.1, 7.2) consistant en un élément de serrage (12) et en un élément de contre-appui (13),
**caractérisé en ce que**,
l'élément de contre-appui (13) est conçu pour s'étendre sur toute la largeur du dispositif de transport (1) et **en ce qu'**il est disposé de façon mobile, notamment pivotante par rapport à l'élément de serrage (12).

2. Dispositif de défournement selon la revendication 1,
**caractérisé en ce que**,
l'élément de contre-appui (13) est susceptible d'être pivoté hors d'une zone de transport (14) des profilés extrudés (8).

3. Dispositif de défournement selon la revendication 1,
**caractérisé en ce que**,
pour dépasser des dispositifs de serrage (7.1, 7.2) ou extracteurs déplaçables à faible distance les uns au-dessus des autres, un élément de contre-appui (13) de l'extracteur qui dépasse est pivoté vers l'extérieur.

4. Dispositif de défournement selon l'une quelconque des revendications 1 à 3, **caractérisé en ce que**,
l'élément de contre-appui (13) est disposé de façon à pouvoir pivoter dans un plan (E1) qui est à peu près parallèle à un plan de transport (E2) d'un dispositif de transport (1).

5. Dispositif de défournement selon l'une quelconque des revendications 1 à 4,
**caractérisé en ce que** l'élément de contre-appui (13) est pivotant, notamment déplaçable dans un sens de déplacement (X) lors du déplacement du dispositif de serrage (7.1, 7.2) contre l'installation d'extrusion.

6. Dispositif de défournement selon l'une quelconque des revendications 1 à 5,
**caractérisé en ce que**,
l'élément de contre-appui (13) est disposé pour pouvoir pivoter d'environ 90°.

7. Dispositif de défournement selon l'une quelconque des revendications 4 à 6, **caractérisé en ce que**,
après un pivotement de l'élément de contre-appui (13) il est disposé environ à la parallèle du dispositif de transport (1).

8. Dispositif de défournement selon l'une quelconque des revendications 1 à 7, **caractérisé en ce que**,
pour pivoter l'élément de contre-appui (13) un orifice (18) est formé entre l'élément de serrage (12) et des parties latérales (15).

9. Dispositif de défournement selon la revendication 8,
**caractérisé en ce que**,
par l'intermédiaire de l'orifice formé (18) le dispositif de serrage (7.1, 7.2), notamment l'extracteur, est déplaçable de façon proche au-dessus du dispositif de transport (1) les parties latérales (15) recouvrant latéralement respectivement les profils extrudés (8) qui restent sur le dispositif de transport (1).

10. Dispositif de défournement selon l'une quelconque des revendications 1 à 9, **caractérisé en ce que**,
l'élément de contre-appui (13) est disposé de façon pivotante par l'intermédiaire d'au moins un élément d'entraînement (19).

11. Dispositif de défournement selon la revendication 10,
**caractérisé en ce que**,
l'élément d'entraînement (19) est associé à l'une des parties latérales (15) alors que dans chaque fois l'autre partie latérale (15,) au moins un évidement (16) est prévu pour fixer et pour loger l'élément de contre-appui (13).

12. Dispositif de défournement selon l'une quelconque des revendications 1 à 11,
**caractérisé en ce que**,
le dispositif de serrage (7.1, 7.2), notamment l'élément de serrage (12) et l'élément de contre-appui (13), est disposé pour être déplaçable dans et à l'encontre du sens de déplacement (X), le long d'un système de guidage (5.1, 5.2) et le dispositif de serrage (7.1, 7.2) est disposé pour être déplaçable dans et à l'encontre d'une direction (Z).

13. Dispositif de défournement selon l'une quelconque des revendications 4 à 10, **caractérisé en ce que**,
le dispositif de transport (1) est muni d'une pluralité d'éléments à cylindres (2) qui sont escamotables, notamment déplaçables sous le plan de transport (E2) l'élément de contre-appui (13) étant déplaçable sous le plan de transport (E2) et lorsque les éléments à rouleaux (2) sont rentrés, étant susceptible de pivoter sous le plan de transport (E2).
